# EUROPEAN PATENT APPLICATION

(11) **EP 4 397 965 A1**
(43) Date of publication of application: **10.07.2024**
(21) Application number: 23214301.6
(22) Date of filing: 05.12.2023
(51) Int. Cl.: G01N 23/046

(54) **A METHOD FOR SCANNING OF AN OBJECT IN A SCANNING APPARATUS**

(30) Priority: 04.01.2023 GB 202300062
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

There is provided a method for scanning of an object in a scanning apparatus. The method comprises disposing the object on a support of the scanning apparatus, so that the object is positioned between an imaging beam emitting element and an imaging beam receiving element oppositely disposed to either side of the support. The support is rotatable relative to the emitting and receiving elements about an axis of rotation to allow creation of an image from projections each taken at a different relative angle of rotation. The object is positioned on the support so that a part to be scanned of the object is offset from the axis of rotation. The method further comprises operating the scanning apparatus at the multiple relative angles of rotation to produce an image of the offset object.

## Description

### TECHNICAL FIELD

The present disclosure relates to a method for scanning of objects in a scanning apparatus such as a computed tomography, CT, scanning apparatus. The present disclosure relates further to a combination of a scanning apparatus for scanning of an object and an object in the scanning apparatus.

### BACKGROUND

The present disclosure is relevant to many scanning technologies, but a primary application is three-dimensional x-ray computed tomography, or CT, which combines multiple x-ray images to recreate a 3-dimensional, 3D, volume, so may be referred to as 3DCT scanning. An x-ray source produces polychromatic x-rays that penetrate a part and form an x-ray image on a detector. The object is (usually) rotated through 360 degrees while being imaged multiple times. The x-ray images are combined via a process called reconstruction to produce a 3D representation of the object. Surface determination is then performed to separate the object volume from the background. Subsequently, cross sections of the object may be viewed by the user. Various alternative apparatuses for CT scanning are seen in known arrangements. In a medical scanner, for example, the object is fixed with the source and detector orbiting the object. There are other options on the market that allow the height to change to take a helical scan or do a slight shift to the height to do a pixel shift scan.

CT and other scanning may be used to inspect non-line-of-sight areas of parts, for example vanes and turbine blades, that are not accessible to alternative inspection techniques such as bore scopes. This is important to be able to deliver novel geometries, for example for cast metal turbine blades and additively manufactured components.

The known arrangements teach that 3DCT scans of cast metal turbine blades, for example, are to be performed on one part at a time as the composition of the part may effectively attenuate the CT scanning x-ray beam. The known arrangements also teach that the object is to be positioned in the middle of the scanning frame, for instance with a vertical axis of rotation of a rotatable CT scanning platform extending through the object. The object may be inclined to create an angle between the axis of rotation and a longitudinal axis of the object. In this case, the orientation of the object may be selected to minimise the path length that the x-ray penetrates. The known arrangements teach that bigger and thicker objects generally produce lower quality scans as they create more beam scattering. Aiming to reduce beam hardening and poor penetration, the known arrangements teach to increase the voltage of the x-ray emitting apparatus and to use a physical or software-based scatter correction. Increasing the voltage produces a higher number of x-rays capable of penetrating more material. The same part scanned at a higher voltage will produce a higher quality image for numerous reasons. However, as taught in known arrangements, the voltage should be limited as too high a voltage will reduce the difference in contrast between two materials as the material will attenuate fewer x-rays. It is desirable to improve the quality and/or efficiency of CT scanning of objects.

A cylinder is the ideal shape to scan, because it has the same thickness whatever the angle of rotation of the table with respect to the emitter and receiver. Components with complex cross sections and/or cross sections that change along their length such as turbine blades and vanes face particular scanning challenges. A turbine blade may present an aerofoil cross-section with a leading edge and a trailing edge face. The leading-edge cross-section is thicker than the trailing edge cross-section. The aerofoil section of the object may have a concave blade surface on one side bounded at either end by the leading and trailing edges and a convex blade surface on the other side. Optimising the CT scan parameters for all features of the object at the same time is difficult. In particular, the concave surface of the blade has the potential to concentrate or converge scattered x-rays and create a high level of noise on the concave side, leading to concave side (or concave wall) effects. A concave wall effect produces image artifacts formed on or around the image of the object due to beam hardening and haloing.

### SUMMARY

According to one aspect, there is provided a method for scanning of an object in a scanning apparatus. The method comprises disposing the object on a support of the scanning apparatus, so that the object is positioned between an imaging beam emitting element and an imaging beam receiving element oppositely disposed to either side of the support. The support is rotatable relative to the emitting and receiving elements about an axis of rotation to allow creation of an image from projections each taken at a different relative angle of rotation. The object is positioned on the support so that a part to be scanned of the object is offset from the axis of rotation. That is, the feature/part of the object which is of interest from the scan is offset from the axis of rotation or the whole object may be offset. The method further comprises operating the scanning apparatus at the multiple relative angles of rotation to produce an image of the offset object.

In one scenario, the scanning apparatus is a two-dimensional or three-dimensional computational tomography, CT, scanning apparatus with a table or platform which is rotatable about a vertical axis, and with oppositely disposed x-ray emitter and receiver units to either side of the table. The object (or part or component) may be directly supported on the platform or held within a jig (or on a support in the form of a jig). It may extend at an angle to the vertical to facilitate cross-sections at preferred angles through the object.

### Publications, see for example,

Rubert, N., Szczykutowicz, T. and Ranallo, F. (2016) "Improvement in CT image resolution due to the use of focal spot deflection and increased sampling," Journal of Applied Clinical Medical Physics, 17(3), pp. 452-466. Available at: https://doi.org/10.1120/jacmp.v17i3.6039., or

Villarraga-Gómez, H. and Smith, S.T. (2020) "Effect of the number of projections on dimensional measurements with X-ray computed tomography," Precision Engineering, 66, pp. 445-456. Available at: https://doi.org/10.1016/j.precisioneng.2020.08.006.,

teach that it is preferable to centre the object on the axis of rotation to, for example, limit beam artifacts. However, the inventor has found that, surprisingly, an offset from the rotational axis gives a better-quality image, for example with reduced beam artifacts and higher contrast.

In the case of a single object only on the support, the object may be offset from the axis of rotation so that its centre (for example centre of mass and/or centre of symmetry) is displaced from the axis, for example by at least half the minimum extent of the object taken in any horizontal plane. The object may be positioned so that the part to be scanned of the object is offset from the axis of rotation. The object may be positioned so that no part of the object intersects the axis of rotation.

Any scannable object and any shape of scannable object may be used in the method. For example, the object may be made of metal or composite or polymer or a mixture of materials. The object can be cast or moulded or machined or 3D printed (additively manufactured), for example. The object may be a simple shape, such as a cylinder or sphere, or a more complex object such as a component for use in a machine. Hence the object may be a blade or vane or other complex manufactured part. The object may be a turbine blade. The blade may have a leading edge and a trailing edge separated by blade surfaces. In this case the blade can have any orientation with respect to the axis of rotation. However, the inventor has surprisingly found that a better image quality results when the leading edge is disposed closer to the axis of rotation than the trailing edge (that is, a line drawn from the axis to the extremity of the leading edge is shorter than the corresponding line drawn to the extremity of the trailing edge).Although, there are certain scenarios, depending on the feature of interest, where orientating the leading edge closer to the axis of rotation may not be desired.

Additionally or alternatively, for a shape of turbine blade having a leading edge and a trailing edge separated by a concave blade surface opposite to a convex blade surface, the convex blade surface may be disposed closer to the axis of rotation than the concave blade surface. Indeed, this arrangement is not limited to turbine blades, any object may have a concave surface opposite a convex surface and be correspondingly positioned. This orientation too, can provide better image quality, for example because the concave surface is facing away from the axis, which has been seen to reduce the concave wall effect. By positioning the blade with the concave side facing away from the axis, image contrast may be improved as the concave side may be in a brighter region of the scan. However, in some scenarios, due to complicated internals, or the leading edge having overly curved and thick geometries, the concave side may be pointed towards the axis of rotation and still be in the bright region to produce a good quality scan. The combination of a turbine blade with the leading edge closer to the axis than the trailing edge and the concave blade surface facing away from the axis has proved particularly advantageous.

Of course, the turbine blade is not limited to a convex surface and concave surface. For example, the turbine blade may have a substantially flat blade surface opposite a concave surface or two concave surfaces opposite one another or any other combination of surfaces from known arrangements.

A plurality of objects may be disposed, offset from the axis of rotation, on the support. In this scenario, the objects may be substantially similar or identical, such as a particular size of turbine blade. As mentioned above for the single object, each object may have its centre (for example centre of mass) displaced from the axis, for example by at least half the minimum extent of the object taken in any horizontal plane. The plurality of objects (which may be similar, substantially identical or different) may be disposed so that no part to be scanned or no part of any of the objects intersects the axis of rotation. Of course, there may be arrangements where an object from the plurality of objects is offset so that no part of it intersects the axis while another object from the plurality of objects may be positioned so that only the part of it to be scanned is offset, for example.

The plurality of objects may be disposed on the support so that a notional line drawn from the emitting element to the receiving element through the axis of rotation intersects two or more of the plurality of objects for at least a third and preferably over half of the projections. That is, the projections, which are taken at equally spaced angular positions around the axis of rotation, may cover 360 degrees of rotation, and the projections over at least 120 degrees (or preferably 180 degrees) may then intersect one or more objects. With this density of object positioning comes an increase in efficiency and, contrary to the established view, the inventor has found that any decline in quality is not significant. In fact, the inventor has come to the surprising realisation that the scan quality may be improved as a larger amount of material allows for more power to be used for the scan without oversaturating the detector. Also, scanning parameters such as the power to voxel size ratio, sometimes referred to as the power to voxel ratio, are easier to adjust to desirable values when the thickness to be scanned of the objects varies less. So, positioning of the objects in which the rays pass through at least one object for more of the projections reduces a variation in thickness to be scanned and can make parameter setting easier. Optimising the software scanning parameters may further improve the scanning efficiency.

As before, the plurality of objects may be turbine blades each with a leading edge and a trailing edge separated by a concave blade surface opposite to a convex blade surface. They may be oriented such that the convex blade surface of each blade faces the axis of rotation, with the advantages enumerated above.

The plurality of objects may be positioned in any suitable arrangement. For example, they may form a pattern on vertices of a notional regular geometric figure centred on the axis of rotation. Taking the turbine blade arrangement, a single blade may be positioned on the three vertices (corners) of a triangle, the four vertices of a square, or the five vertices of a pentagon, or the six vertices of a hexagon etc..: any notional figure can be used. A further plurality of objects may be positioned in a pattern on the vertices of a further notional regular geometric figure centred on the axis of rotation and inside the notional regular geometric figure. An object or objects of the further plurality of objects may have substantially similar geometries to the plurality of objects or may be different from the plurality of objects and/or each other. Additionally or alternatively to the further plurality of objects, an attenuating object or objects such as a solid cylinder may be disposed in the inner region, for example centred on the axis.

The objects (in the pattern) may be oriented to provide rotational symmetry of the pattern of objects about the axis of rotation. Optionally, the objects may be substantially similar or identical in construction and disposed on the support so that the order of rotational symmetry is equal to the number of vertices of the notional regular geometric figure. Of course, the objects may be constructed of different materials but have substantially similar forms and therefore still exhibit rotational symmetry. Alternatively, the objects may have different shapes and still possess a rotational symmetry about the axis of rotation in terms of positioning.

The objects may be positioned on some but not all of the vertices of the notional regular geometric figure (for example two of the four vertices of a square). In this case, all of the objects may be positioned to one side of a plane along which the axis of rotation extends (as seen in plan view for a vertical axis and horizontal support all the parts are to one side of a straight line drawn through the axis of rotation). Surprisingly, the inventor has found that such an asymmetrical arrangement, with half of the available space left empty, provides a better quality. By placing the leading edge of a turbine blade for example on one vertex of a square, so that it is adjacent to the trailing edge of a second turbine blade on the next vertex, even better image quality of the second turbine blade may be obtained.

In another arrangement with a plurality of objects the objects may be grouped in a configuration, for example adjacent to each other and preferably aligned.

For example a configuration such as a row of two or more than two, such as four, objects may be positioned with the centre of the configuration on the axis or with the configuration at each vertex (or one or more selected vertices) of the notional regular geometric figure, such as a square (seen in plan view with a vertical axis of rotation).

The objects may be elongate (such as the turbine blades previously described) and a shape of the configuration formed by the combined shape of the objects in the configuration may have a lower aspect ratio than a single one of the objects. This can give a shape of the configuration which is more similar to the "ideal" cylindrical shape for scanning in which thickness of material to be penetrated is constant for all the projections. In other words, the configuration can minimise the variation in material thickness between the emitter and receiver penetrated at the multiple relative angles of rotation. The aspect ratio of the configuration may be less than two thirds, or even less than half, of the aspect ratio of a single one of the objects. The aspect ratio of the combined shape may be computed using the aspect ratio of a rectangular bounding box around the two (or more) cross sections.

The objects may be directly adjacent, for example in the sense that the shortest straight-line distance between the cross sections is shorter than the largest material thickness of any of the objects measured in any direction in the cross section.

When the objects are turbine blades, the blades may be positioned in the configuration in alternate head-to-toe configuration with the leading edge of one blade positioned adjacent to the trailing edge of the adjacent blade. The chords of all (or both) the blades (for example, all two, three, four or more blades) in the configuration may be aligned. If the blade has convex and concave blade surfaces, and there are two blades at each vertex, the concave surface of one turbine blade at a vertex may face the concave surface of the other turbine blade. Alternatively, the convex surface of one turbine blade may be opposite the convex surface of an adjacent turbine blade.

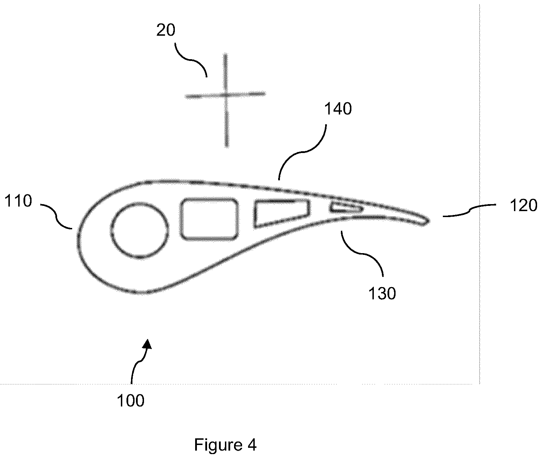

In another arrangement, the object or each object or a configuration of objects may be contained within a jacket. The volume surrounding the object(s) within the jacket may be occupied by a filling material or may be a solid, that is a solid jacket volume. The jacket may completely surround the object or may surround the part to be scanned of the object. The jacket may be positioned offset to the axis of rotation. In one example, no part of the object(s) to be scanned, that is the part of interest from the scan, or no part of the objects or configuration of objects intersects the axis of rotation. As before, the object contained within the jacket may be a turbine blade. Of course, all the aforementioned arrangements apply to the object when it is contained within the jacket, for instance the arrangements shown in Figures 4 to 13. That is, for example, a plurality of jacket configurations may be disposed on the vertices of a notional regular geometric figure.

The arrangement may further comprise filling the volume surrounding the object within the jacket with the filling material. The filling material may be poured or added into the jacket after the object has been placed into the jacket. The jacket may completely surround the object.

Surprisingly, the inventor has found that use of a surrounding jacket (which is thus in a fixed stationary relationship with the object) and with a solid jacket volume or filling material within the jacket can significantly improve the scan quality for many objects, especially those with complex cross sections and/or cross sections that change along their length.

The filling material or solid jacket volume may have an imaging beam attenuation close to the imaging beam attenuation of the material of the object (such as within 20% or 10% of the imaging beam attenuation of the material of the object). The filling material or solid jacket volume may have substantially the same imaging beam attenuation as the imaging beam attenuation of the material of the object. The constant attenuation coefficient throughout the filling material or solid jacket volume may improve the image quality for each projection taken at varying angles. Averaging out the material thickness by, for example filling in any concave surfaces, may reduce artifacts caused by x-rays scattering off the object's surface and the concave wall effect, even with a filling material or solid jacket volume having a different level of attenuation from the object.

The filling material may be in the form of powder, grains, or fluid. The filling material may , for example, be either metal powder or polymer powder and thus may be poured into the jacket. This allows the filling material to completely surround the object(s) or the part(s) of the object(s) to be scanned, completely filling any voids or gaps between the object(s) and the jacket. This may provide an approximately constant material thickness for each projection, thereby improving image quality of the scan.

The object may be formed of a metal: pure, alloy or composite, for example. The powder may be in the form of metal powder of the same material as the object or the solid jacket volume may be a metal of the same material as the object. As before, matching the (mass) attenuation coefficient of the powder, or solid jacket volume, with the object, by using the same material as the object, may improve image quality. In the case where the object is a cast turbine blade or other object with a concave surface, the metal powder or solid metal volume may fill the concavity, thereby reducing image artifacts caused by scattering and beam hardening, for example.

There may be a border region surrounding or partially surrounding the object in the jacket with an imaging beam attenuation different from the imaging beam attenuation of the object. For example, the border region has a lower imaging beam attenuation than the imaging beam attenuation of the object. The region may be formed of a material with a lower density than the object, for example the region may be an air gap.

The object may be wrapped or coated in one or more films, sleeves or walls, for example a polymer film such as cling film or a polymer membrane or a polymer bag or a polymer wall (which may be 3D printed), to provide a boundary between the object and the filling material or the solid jacket volume. The one or more films, sleeves or walls may form the border region. The object may be wrapped in the film, inserted into the sleeve or placed between moulded walls before placing it in the jacket. This may prevent the object contacting the filling material or solid volume and may therefore prevent contamination of the object. Any suitable material may be used to cover the object before it is placed in the jacket. The film, wall or sleeve may have a low imaging beam attenuation and may therefore aid identification of the object in the jacket by providing a contrast in the scan image at the object's surface and act as or delimit the border region mentioned above.

The jacket may have a circular cross-section or substantially circular cross-section. It may comprise one or more walls together forming a spherical or part spherical surface or may have a cylindrical side wall extending from a base. The jacket may completely surround the object. If the jacket is hollow (to receive a filling material) and has a spherical or part spherical surface, it may be constructed in pieces to allow a cap (forming part of the spherical or part spherical surface) to be added to a main part (also forming part of the spherical or part spherical surface) once the jacket has been filled. If there is a base and cylindrical side wall, the base and side wall may be formed of a polymer film or wall and may contain the filling material. The jacket may have a solid volume or may contain the filling material, and in either case may surround the object so that the thickness of material to be penetrated is approximately constant for all projections. Thus, the image quality and contrast of the scan may be improved. The polymer film or wall may have a relatively low imaging beam attenuation as compared to, for instance, the metal powder. Hence, the polymer may have a minimal effect on the image quality of the scan.

In a further aspect, there is provided a combination of a scanning apparatus for scanning of an object and an object in the scanning apparatus (both as previously described). The scanning apparatus comprises: a support for the object; and an imaging beam emitting element and an imaging beam receiving element oppositely disposed to either side of the support, wherein the support is rotatable relative to the emitting and receiving elements about an axis of rotation to allow creation of an image of the part to be scanned of the object or the object from projections each taken at a different relative angle of rotation; wherein the part of the object to be scanned or the object is positioned on the support offset from the axis of rotation; so that when the scanning apparatus is operated at the multiple relative angles of rotation it produces an image of the object at a position which does not overlap the axis of rotation.

The apparatus for scanning the objects may be a two-dimensional or three-dimensional computational tomography, CT, scanning apparatus, such as a three-dimensional, 3DCT, scanning apparatus. The imaging beam emitting element may emit an energy beam within the x-ray region of the electromagnetic spectrum. The emitted x-rays may form a polychromatic x-ray spectrum. The x-rays may be formed by a tungsten metal element within the imaging element. Of course, the emitting element may emit other energy forms such as gamma rays or ultrasound or any other energy beam suitable for scanning. The imaging beam emitting element and the imaging beam receiving element may be oppositely disposed to either side of the support.

The support may be a table which rotates about a vertical axis and the objects may be disposed on the support. Alternatively, the support may be fixed and the imaging beam emitting element and the imaging beam receiving element may rotate around a vertical axis centred on the support.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### BRIEF DESCRIPTION OF THE DRAWINGS

Examples will now be described with reference to the accompanying drawings, which are purely schematic and not to scale, and in which:
**Figure 1** is a schematic illustration showing an exemplary 3-dimensional CT scanning arrangement;
**Figure 2** is a flow chart showing steps of a method for scanning of an object or a plurality of objects in a scanning apparatus;
**Figure 3** is a diagonal view of an aerofoil section of a turbine blade;
**Figure 4** is a sectional plan view of a turbine blade disposed relative to an axis of rotation of a support in a CT scanning apparatus;
**Figure 5** is another sectional plan view of a turbine blade disposed relative to an axis of rotation of a support in a CT scanning apparatus;
**Figure 6** is a sectional plan view of two turbine blades disposed relative to each other on a support in a CT scanning apparatus;
**Figure 7** is another sectional plan view of two turbine blades disposed relative to each other on a support in a CT scanning apparatus;
**Figure 8** is a sectional plan view of four turbine blades disposed relative to each other on a support in a CT scanning apparatus;
**Figure 9** is a sectional plan view of two turbine blades disposed relative to an axis of rotation of a support in a CT scanning apparatus;
**Figure 10** is a sectional plan view of four turbine blades disposed relative to an axis of rotation of a support in a CT scanning apparatus;
**Figure 11** is another sectional plan view of four turbine blades disposed relative to an axis of rotation of a support in a CT scanning apparatus;
**Figure 12** shows a combination of a set/configuration of two turbine blades, as depicted in Figure 4, disposed relative to an axis of rotation of a support in a CT scanning apparatus;
**Figure 13** shows a plurality of batteries disposed relative to an axis of rotation of a support in a CT scanning apparatus
**Figure 14** is a sectional view of a turbine blade disposed within a jacket.

### DETAILED DESCRIPTION

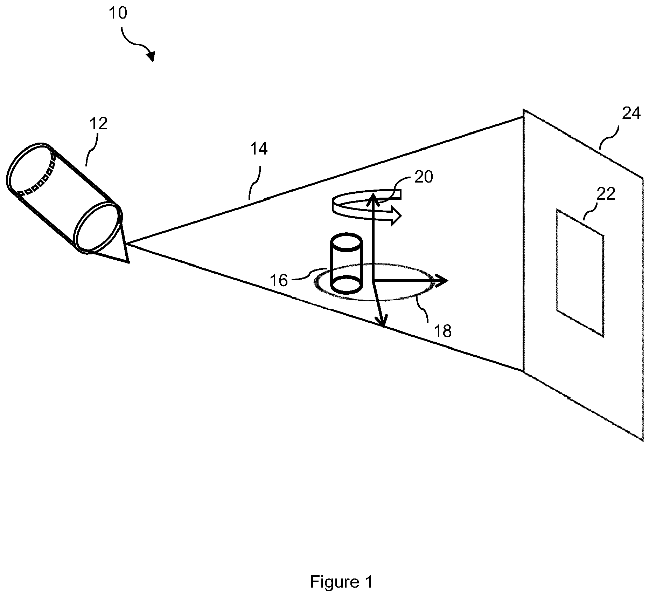

**Figure 1** illustrates the basic principles of an exemplary 3DCT scanning technique of a type which may be used in the method discussed herein. A 3D computer tomography (CT) scanning apparatus 10 may be used to perform a volumetric scan. The 3DCT scanning apparatus 10 comprises an imaging beam, i.e. x-ray emitting, element 12, a support 18 and an imaging beam, i.e. x-ray detecting, element 24. The volumetric scan may be any scan which is capable of generating a 3-dimensional (3D) image of an object 16 positioned on the support 18 and contained within an x-ray beam cone 14. The x-ray emitting element 12 generates the x-ray beam cone 14 which may comprise polychromatic x-rays (not shown). The support (usually a table on which the object or a jig is positioned) may be configured to rotate about a (usually vertical) axis of rotation 20 so that the object 16 positioned directly or indirectly on the support rotates about the axis of rotation. The object is shown here as a simple cylinder. The polychromatic x-rays penetrate the object and are received by the x-ray detecting element. A volumetric x-ray image 22 of the object is formed from the output of the x-ray detecting element. For example, the output may be processed in a manner known per se to form one or more two-dimensional images in the form of "slices" (cross-sections) through the object.

As will be appreciated, in order to capture complete slices through the relevant part of the object via the type of technique described above, the part of the object being scanned should remain entirely within the x-ray beam cone whilst it is rotated.

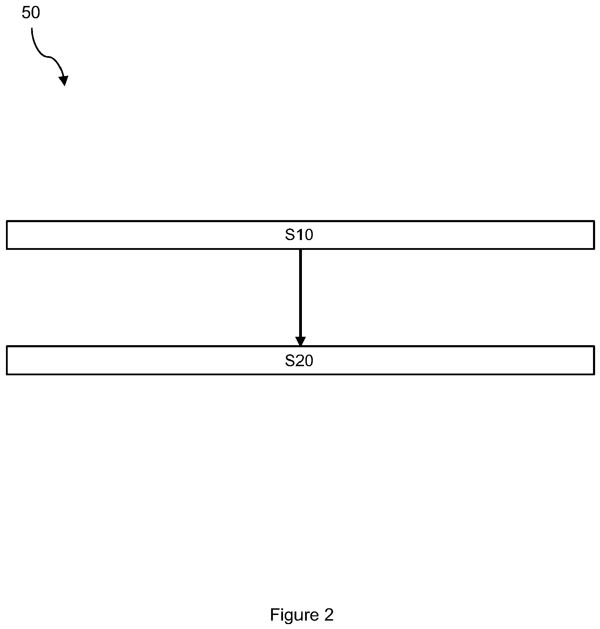

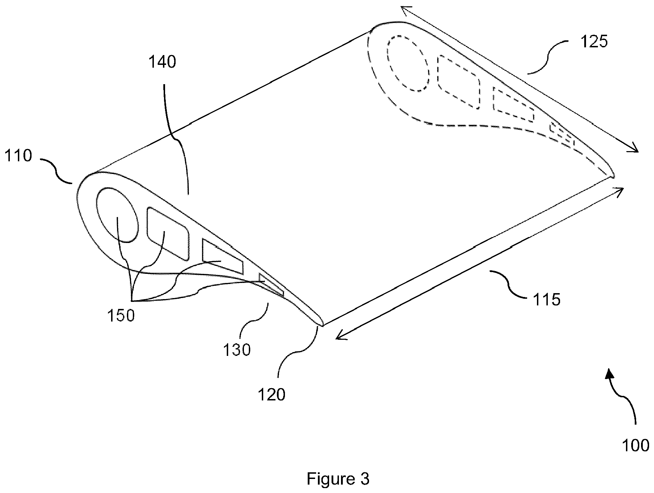

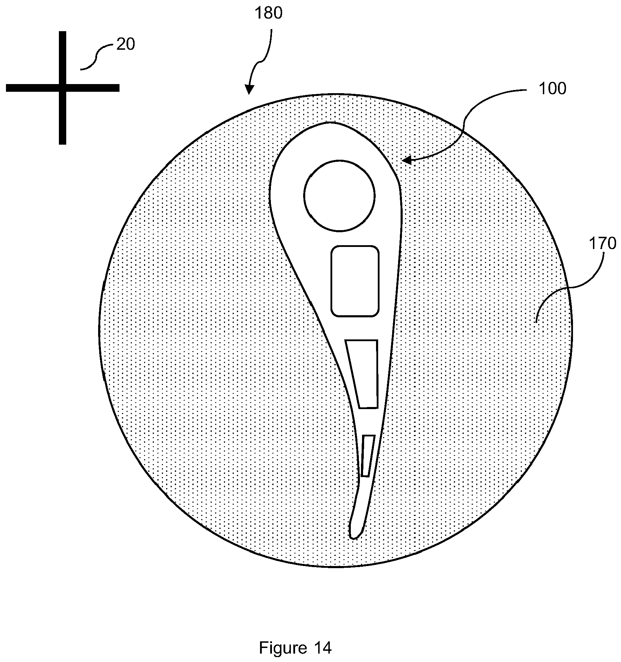

**Figure 2** is a flow chart showing steps of a method 50 for scanning of an object or a plurality of objects in a scanning apparatus. In step S10 the object(s) is (are) disposed offset from the axis of rotation on a support in the scanning apparatus, for example manually. The objects may be held in a jig and so indirectly positioned on the support. The scanning apparatus may be, for example, substantially similar in construction to the 3DCT scanning apparatus 10. The objects may be turbine blades 100, for example those which are depicted in Figure 3. It will be appreciated that the objects could, however, take any form. Additionally, the objects may be disposed in a jacket 180, see Figure 14, or plurality of jackets, before scanning. The objects and/or jackets may be disposed in a pattern around the axis of rotation with no part of them intersecting the axis or with no part of the object to be scanned intersecting the axis, that is no part of the object which is of interest from the scan.

In S20 the scanning apparatus is operated at multiple relative angles of rotation to produce an image of the offset object(s). A projection or projections may be taken at each angle around a complete 360 degrees and a complete volumetric representation of the object(s) may be obtained from a set of equally angularly spaced projections. The volumetric representation may comprise a plurality of voxels, with each voxel representing a sub-volume of the image. Subsequently the image can be viewed in cross sections, as in known arrangements.

**Figure 3** shows a diagonal view of an aerofoil section of a turbine blade 100. Other parts of the blade, such as a mounting section are less relevant and not shown. The turbine blade in this arrangement is formed from a metal material which may be cast metal, but the teaching herein can be applied to objects of any scannable material.

The turbine blade comprises a leading edge 110, a trailing edge 120, and blade surfaces between these edges, such as a concave surface 130 and a convex surface 140. The concave surface extends in an inwardly curved shape between the leading edge and the trailing edge. The convex surface of the turbine blade extends in a similar manner to the concave surface, but with an outward curve and is opposite to the concave surface. There may be void regions 150 (without the material). For clarity only, exemplary voids are illustrated in Figure 3. There are four voids illustrated, although it will be apparent to the skilled reader that more or fewer voids may be present.

Sometimes only a small region of a large object is scanned. For example, the aerofoil section (rather than any mounting section) is generally of primary interest when CT scanning turbine blades, and in particular the internal structure of the aerofoil section is to be investigated. The aerofoil section may, for example, be considered as the part of interest of the object. A turbine blade may be disposed on the support so that its mounting section is intersecting the axis of rotation, but the aerofoil section does not. That is, the part of the object to be scanned does not intercept the axis of rotation. As a further example, an object in the shape of the letter 'L' may be disposed on the support. It may be that only the vertical part being scanned is offset from the axis but the bottom horizontal part may still intercept the axis of rotation.

As will be appreciated by those of skill in the art, the turbine blade comprises an elongate aerofoil section (part) of the turbine blade having a span 115. Further, a chord 125 maybe be drawn between the extremities of the leading edge and the trailing edge.

As shown in **Figure 4****,** the turbine blade may be disposed on the support so that it is offset from the axis of rotation 20. The axis of rotation extends into the plane of the page and is shown as a cross. In this first arrangement, the blade is disposed with the convex surface proximal to the axis of rotation and the concave surface distal to the axis of rotation, that is the convex surface faces the axis of rotation. This can be helpful in countering the concave wall effect by placing the concave wall in a "brighter area" of the x-ray scan, away from a central "dark spot" on the axis. In some scenarios, however, due to complicated internals, or the leading edge having overly curved and thick geometries, the concave side may be pointed towards the axis of rotation and still be in the bright region to produce a good quality scan. The object is offset, but disposed with the axis of rotation in between the leading edge and trailing edge (or within the extent of the object, in more general terms) when viewed from one side of the CT table, so approximately the centre of convex wall is facing the axis.

A longitudinal axis of the object can be defined, using the turbine blade in Figure 3, as being parallel to the span of the turbine blade and extending along the span of the aerofoil section. In Figure 4 the longitudinal axis is substantially parallel to the axis of rotation (extending into the plane of the page). The object may, however, be orientated to form an angle between the longitudinal axis of the object and the axis of rotation.

The turbine blade is used by way of example only; the object is not limited to taking this form. A longitudinal axis can be defined in a similar manner for a different object.

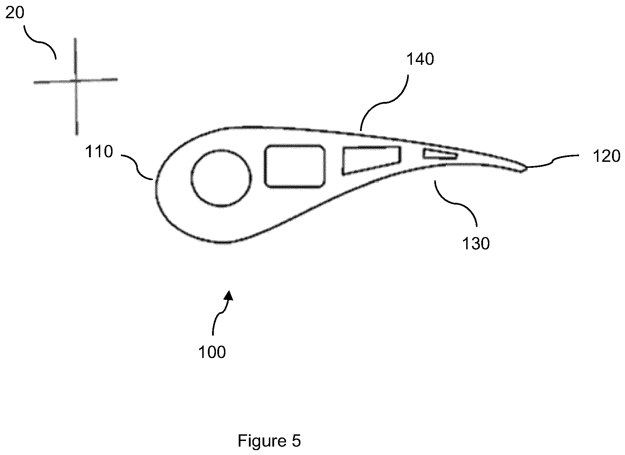

**Figure 5** shows a second arrangement for disposing the turbine blade, relative to the axis of rotation of the support. In Figure 5 the turbine blade is disposed with the leading edge proximal to the axis of rotation and the trailing edge distal to the axis of rotation. In this arrangement, the object is disposed so that the convex surface is closer to the axis than the concave surface but does not face the axis head-on, and the concave surface has no direct "line of sight" to the axis of rotation. The longitudinal axis of the object is illustrated as substantially parallel to the axis of rotation by way of example only.

Disposing an object offset from the axis of rotation of the support of the 3DCT scanning apparatus may improve image quality and contrast of the CT scan. Positioning the object so that it is offset from the axis of rotation may also reduce the concave wall effect. The geometry of the object may have a thin region that normally has a darker or lower contrast when scanned. By keeping the object in an orientation where such a geometric element is in the brighter outer half of the scan, the difference in contrast between inner and outer or thicker and thinner regions may be reduced. For turbine blades with a hollow trailing edge, positioning the blade with the trailing edge away from the axis of rotation may keep it in the brighter outer region. The blade may also be orientated to keep the concave and convex surfaces equidistant from the axis of rotation to provide an even image contrast between the surfaces. It will be appreciated that the optimum orientation will be affected by the curvature of the blade. Further, disposing the object so that its longitudinal axis is at an angle to the axis of rotation may improve image quality and contrast of the scan.

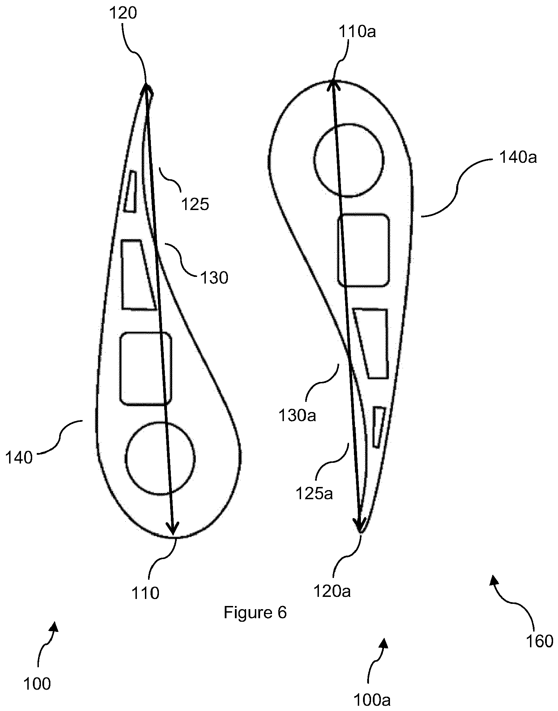

**Figure 6****,** a third arrangement, shows a sectional view of the turbine blade previously described positioned adjacent to another turbine blade which has a substantially similar (or identical) construction to the first turbine blade. The turbine blades are disposed within the scanning apparatus in a favourable orientation relative to one another (with an air gap between them). The leading edge of the first blade is adjacent a trailing edge 120a of the second blade and the trailing edge of the first blade is adjacent a leading edge 110a of the second blade, so that they are in a "yin-yang" or "head to toe" configuration, with the combined thickness of material to be penetrated by a scanner when the blade surfaces face the x-ray emitting element being evened out in a direction between the leading and trailing edges. In this arrangement the concave surface of the first blade faces the concave surface 130a of the second blade.

Additionally, and/or alternatively, the orientation of the first object relative to the second object may be understood by drawing the chords 125-125a between the extremities of the leading edge and the trailing edge. The orientation of the first blade relative to the second blade is such that the chord 125 of the first blade is substantially parallel to the chord 125a and spaced from it in a direction at right angles to the chords.

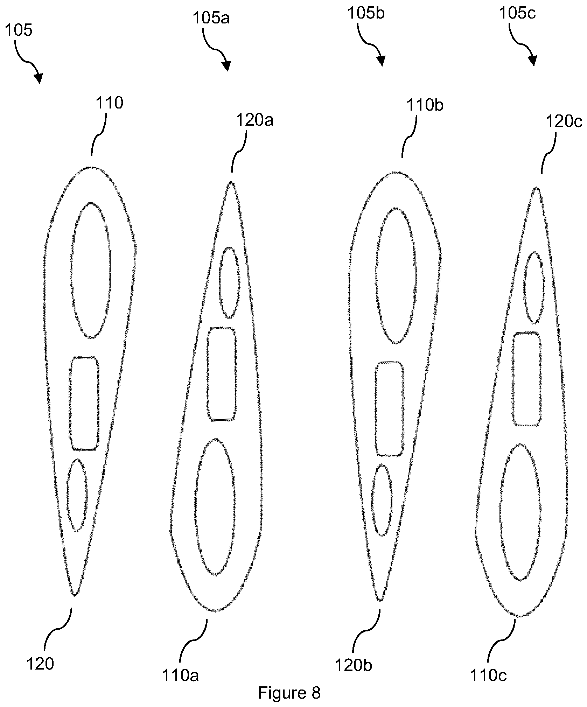

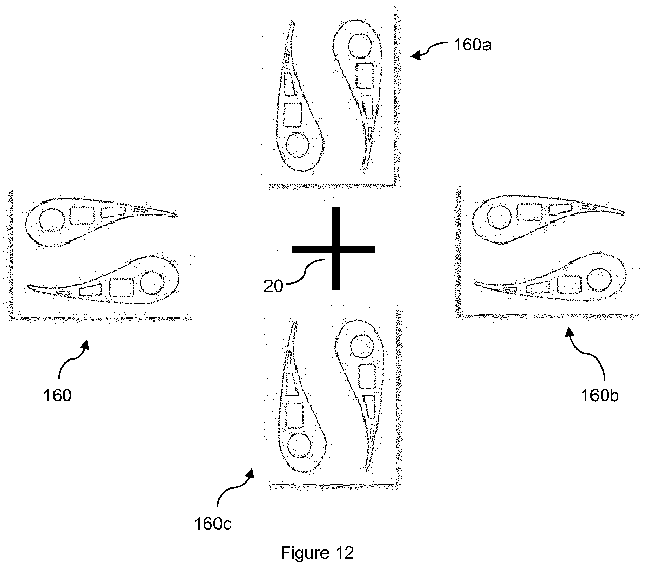

Disposing a first object relative to a second object in this manner may be considered as making up a base configuration 160. A plurality of base configurations may be oriented relative to one another and the axis of rotation, see for example Figures 8 and 12.

As will be appreciated, when the first object and the second object are positioned in this base configuration on the support, the support rotates about the axis of rotation and the two objects will rotate together, in their relative orientation as a whole around the axis of rotation within the x-ray beam cone, in the manner described above with reference to Figure 1. The axis may, for example, extend centrally between the objects, so that they are equally offset from it, or it may extend in any other position, but preferably not through either of the objects. A complete volumetric representation of the two objects may be obtained by acquiring a set of CT slices. That is, the first object and the second object are CT scanned simultaneously to produce sectional slices of both objects at the same time. 3DCT scanning efficiency of objects may be improved as a plurality of objects may be scanned simultaneously. For example, such scans may be efficient but still of sufficient quality to issues like miss-formed features in the internal passage.

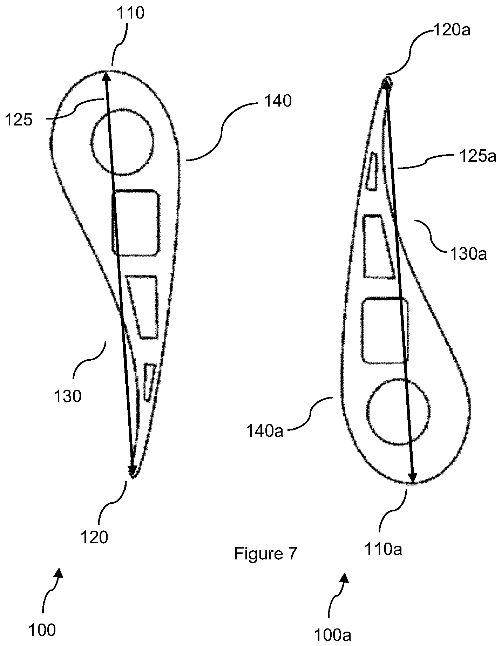

**Figure 7** shows a fourth arrangement for positioning the first turbine blade and the second turbine blade relative to each other. The leading edge of the first blade is adjacent the trailing edge of the second blade and the trailing edge of the first blade is adjacent the leading edge of the second blade, so that the combined thickness is evened out, as mentioned above, the positioning with respect to the axis is the same as in Figure 6 and the chords are parallel as before. However, in this case, the convex surface of the first blade faces a convex surface of the second blade.

A problem the inventor identified when scanning individual turbine blades with an aerofoil cross-section was poor contrast and image quality in either the thinner trailing edge or the thicker leading edge, because different scanning parameters are suitable for the different thicknesses in these two different blade areas. Also, the concave surface and convex blade surfaces can lead to scanning issues. Thus, optimising the 3DCT scan parameters for turbine blade's aerofoil forms (and indeed other objects with uneven thickness across their length) is a problem in known arrangements and may lead to scan artifacts such as beam hardening and the concave wall effect.

The inventor has come to the realisation that by evening out the material thickness between the two objects and positioning them offset from the axis, the image quality and contrast of the 3DCT scan may be improved as, for example, artifacts from the 3DCT may be reduced or eliminated. Further, the 3DCT scanning efficiency of objects may be improved as a plurality of objects may be scanned simultaneously.

**Figure 8****,** a fifth arrangement, shows a sectional plan view of a configuration of four turbine blades 105-105c with similar constructions to the turbine blade 100. That is, the turbine blades have leading edges 110-110c and trailing edges 120-120c and opposite blade surfaces extending between them. These surfaces may have substantially flat parts, as depicted. The four blades may, however, have substantially similar (or identical) constructions to the blade previously described. In the Figure 8 configuration, the four blades are in alternating head to toe positioning. Convex and concave blade surfaces may be positioned as per the base configurations of the third arrangement in Figure 6 or fourth arrangement of Figure 7. For example, the configuration in Figure 8 may be realised by disposing two base configurations of two turbine blades aligned and adjacent each other each according to the third arrangement. Alternatively, all the convex surfaces may face the same way, or alternate convex surfaces may face the same way.

Further, it is understood that this arrangement of a line of blades is not limited to four objects and more or fewer may be used.

As will be appreciated, when the four blades are disposed on the support, the support rotates about the axis of rotation such that the four blades will rotate together, in their relative orientation, around the axis of rotation within the x-ray beam cone, in the manner described above with reference to **Figure 1****.** The four blades may be disposed such that the combined thickness of material to be penetrated by the scanner when the blade surfaces face the x-ray emitting element is evened out in a direction between the leading and trailing edges. The aspect ratio of the four blades together (or a line of two or more blades taken together) is lower than the aspect ratio of a single turbine blade. Indeed, this configuration may reduce the combined aspect ratio of a plurality of any objects with relatively high aspect ratios. For higher aspect ratio objects, more objects may be used in the line to even out the material path length (thickness)

A complete volumetric representation of the four blades may be obtained by acquiring a set of CT slices. That is, the four blades are CT scanned simultaneously to produce sectional slices of all four blades at the same time. 3DCT scanning efficiency of objects may be improved as a plurality of objects may be scanned simultaneously.

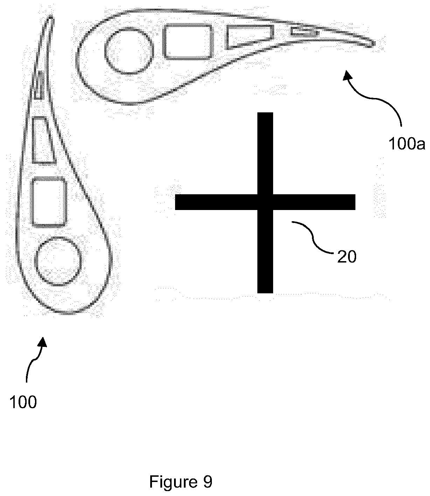

**Figure 9** shows a sectional view of two turbine blades 100 and 100a, and the axis of rotation 20. The first blade and the second blade are orientated favourably relative to each other and the axis of rotation. Considering a notional regular geometric shape (not shown) such as a rectangle or square or triangle for example, with a centre of symmetry aligned with the axis of rotation, the first object and second object may be positioned on two adjacent vertices of the geometric shape with the trailing edge of the first blade adjacent the leading edge of the second blade.

Positioning the first and second blades on the vertices of the geometric figure may improve the image quality and contrast of the first object and/or the second object. The skilled reader will understand that the orientation of the first object relative to the second object may be varied to improve the image quality and contrast of the first blade and/or the second blade.

In the arrangement shown in Figure 9, the blades effectively leave half the field clear by only taking up half of the available vertex positions. This asymmetrical arrangement, with half of the available space left empty, provides a better quality. The blades are shown with the leading edge of a turbine blade on one vertex of a square adjacent to the trailing edge of a second turbine blade on the next vertex, allowing even better image quality of the second turbine blade may be obtained.

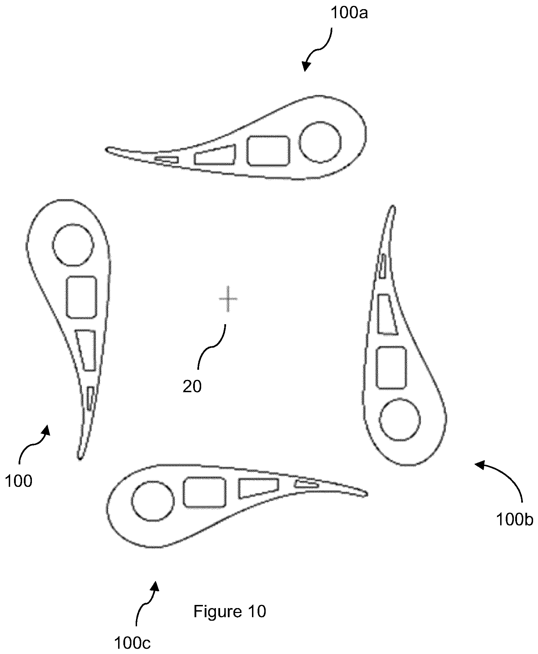

**Figure 10** shows a sectional view of four turbine blades 100-100c and the axis of rotation 20. The four objects are orientated favourably relative to each other and the axis of rotation.

Considering the notional regular geometric figure (extending parallel to the plane of the support) with four vertices (not shown) and with a centre of symmetry aligned with the axis of rotation, the four blades are shown positioned on each of the four vertices. The four blades may be positioned with their convex surfaces facing the axis of rotation. Indeed, the reader will understand that the four objects are not limited to this orientation relative to the axis of rotation and may be disposed with their concave surfaces facing the axis of rotation.

It will be appreciated that this arrangement is not limited to four objects and/or geometric figures with four vertices. More or fewer than 4 objects may be positioned around the axis of rotation on the vertices of a geometric figure. As illustrated in Figure 9, not all vertices of the geometric figure may be occupied.

Positioning a plurality of objects on the vertices of a geometric figure may improve the image quality and contrast of a CT scan as the thickness of material the x-ray beam penetrates during each projection is evened out. In a scan of objects or parts of objects offset from the axis of rotation, the inner sides of the objects or parts of the objects will be darker than the outer sides. Introducing more material for the x-rays to penetrate may improve the scan quality as the power of the scanner may be adjusted to levels where previously image contrast would be reduced. The adjusted power may result in a relatively even contrast across the objects. Of course, other scanning parameters may be adjusted and optimised to improve the quality and efficiency of scanning the plurality of objects.

The skilled reader will understand that the orientation of the four objects relative to each other and the axis of rotation may be varied to improve the image quality and contrast of the objects.

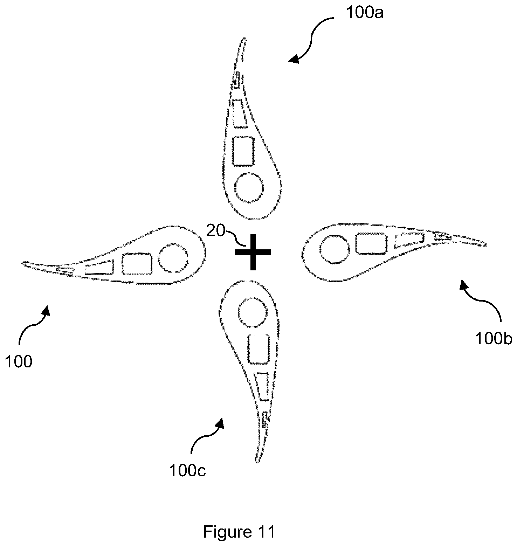

Another arrangement is illustrated in **Figure 11****,** which shows the sectional view of the four blades and the axis of rotation. Considering the notional geometric figure with 4 vertices, positioned with the centre of symmetry on the axis of rotation, the four blades may be positioned on the vertices of the figure with their leading edges facing the axis of rotation and proximal to the axis of rotation and the trailing edges distal to the axis of rotation. That is, their leading edges are closer to the axis of rotation than their trailing edges.

It will be appreciated that this arrangement is not limited to four objects and/or geometric figures with four vertices. More or fewer than 4 objects may be positioned around the axis of rotation on the vertices of a geometric figure. As depicted in Figure 9, not all vertices of the geometric figure may be occupied.

**Figure 12** shows a sectional view of 8 turbine blades and the axis of rotation. This arrangement may be realised by considering the notional geometric figure with 4 vertices positioned with the centre of symmetry on the axis of rotation, and by disposing a plurality, in this case four, of base configurations 160-160c on the vertices of the geometric figure.

As will be appreciated, the base configuration is not limited to that given in the third arrangement. For example, a base configuration may be provided as, but is not limited to, the configuration shown and described in the fourth and fifth arrangements. Further, it is understood that this arrangement is not limited to four sets of the base configuration. More or fewer sets of the base configuration may be used. It is also understood that the number of vertices of the geometric figure/shape is not limited to four, more of fewer vertices may be used. The plurality of base configurations may be disposed on one of more the vertices of the geometric shape and is not limited to being disposed on all vertices.

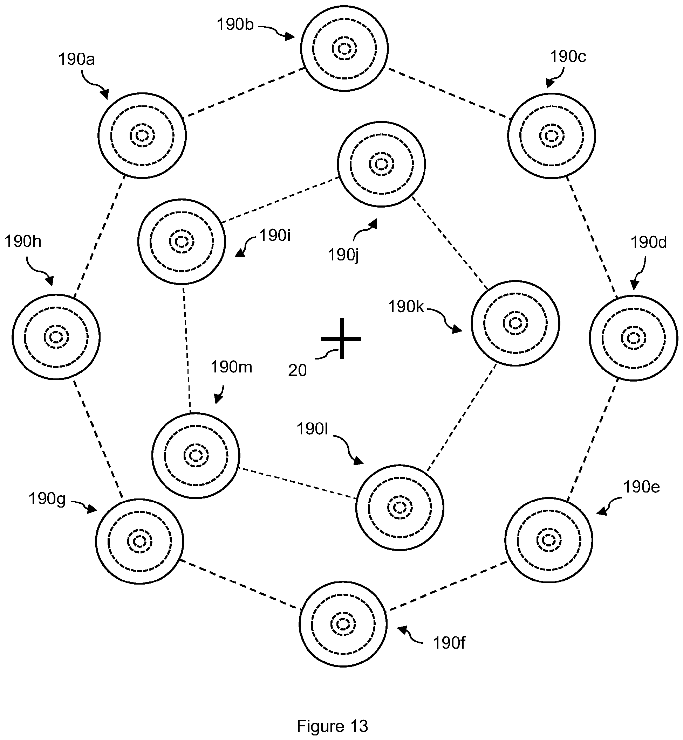

**Figure 13** shows a plurality of batteries 190-190m disposed relative to the axis of rotation. Considering the notional regular geometric figure, the batteries may be disposed on the vertices of an octagon (shown with dashed lines in the figure) and on the vertices of a further notional regular geometric figure, in this example a pentagon (also shown with dashed lines in the figure), inside the notional regular geometric figure. Of course, geometric figures with a different number of vertices may be used.

In a scan using batteries with a circular cross-section, for example, with longitudinal (vertical) axes parallel to the axis of rotation but offset from the axis of rotation, the inner side of the batteries (closer to axis of rotation) will be darker than the outer side. Introducing more material inside the notional geometric figure by, for example, arranging further batteries in a pattern around an inner notional figure, may improve the scan quality of the batteries in the outer region. The extra material in the inner region of the support allows for the power of the scanner to be adjusted so that the batteries on the outer geometric figure have a relatively even contrast across their cross-sections.

As will be appreciated, this arrangement may apply to any object, and objects of different size and shape may be used in the same scan. Additionally or alternatively, an attenuating object or objects not shown here (for example a solid cylinder) may be disposed in the inner region, such as centred on the axis,

**Figure 14** is a sectional view of the turbine blade disposed within a jacket 180. The jacket, which in Figure 14 has a circular cross-section, but may take any suitable form, contains a filling material 170 (or may contain a solid jacket volume). For example, the filing material is a powder made from the same material as the object disposed within the jacket or the jacket has a solid jacket material such that the volume surrounding the object is solid. Indeed, the solid jacket volume may be made from the same material as object. In an arrangement where the object is a turbine blade made from a cast metal, the powder or solid jacket volume may, for example, be made for the cast metal. The material of the powder or solid jacket volume may be matched with the material of the object so that the powder or solid jacket volume and object have the same imaging beam attenuation. That is, as the powder or solid jacket volume, and object are made from the same material, they have the same attenuation coefficient. Hence, it will be appreciated that any material may be used for the powder or solid jacket volume in this example so long as it has a similar, or substantially similar, imaging beam attenuation as the object disposed within the jacket.

It will be understood that if more than one object is within the jacket, the objects disposed within the jacket may be made of different materials. The imaging beam attenuation of the filling material or solid jacket volume may be matched to one of the objects, that is the filling material or solid jacket volume may be the same as the material of one of the objects, for example. Alternatively, the composition of the filling material or solid jacket volume may be chosen so that its imaging beam attenuation is an average of the imaging beam attenuations of the objects. The imaging beam attenuation, and the (mass) attenuation coefficient, of the filling material or solid jacket volume may lie within the range of the imaging beam attenuations of the objects.

The jacket, in this example, is made from a polymer material. However, it is understood that any material, for example with a relatively low x-ray attenuation coefficient, compared to, for example, a cast metal turbine blade, may be suitable so as to not interfere with the scan quality.

The blade (or object) is disposed within the jacket with the filling material (or in another arrangement with the solid jacket volume) and may be covered by a polymer film (not shown) to prevent contact between the object and the filling material (or solid jacket volume). Additionally or alternatively, the object may be wrapped or placed within a 'sleeve-like' wall or cooperating walls (preferably contiguous with the object surfaces) to separate it from the filling material or solid volume. It will be understood that a plurality of blades and/or, indeed, any object or plurality of objects may be disposed within the jacket. The film may prevent contamination of the object from the filling material or solid volume. Further, the film may provide a region between the filling material, or solid volume, and object with an imaging beam attenuation different from the object's imaging beam attenuation. For example, the polymer film may have a lower imaging beam attenuation (or lower density) than the object. Thus, there will be a contrast at the border region-object boundary of the scan. This may aid in the identification of the object in the image scan.

As will be appreciated, if the jacket, with an object disposed within it, is positioned offset on a support of a scanning apparatus, the support may rotate about the axis of rotation such that the jacket and its contents move, around the axis of rotation, within the x-ray beam cone, in the manner described above with reference to Figure 1. The object may be disposed within the jacket or the jacket may only surround the part of the object to be scanned. It will be understood that that either the jacket may be disposed on the support or it may be that the part of the object not to be scanned is disposed on the support so that the jacket is in the scanning region, for example.

Averaging out the material thickness of an object (or plurality of objects) by disposing it (them) in a jacket with a filling material or solid jacket volume, may reduce artifacts caused by the concave wall effect. Regions of the object(s) where x-rays may have been concentrated and scattered may be covered by the filling material or solid volume, thus reducing scattering and beam hardening effects. The jacket may provide the "ideal" circular cross-section for scanning in which thickness of material to be penetrated is constant for all the projections. The jacket may be, for example, a cylindrical shape or spherical shape depending on the relative motion of the scanning elements in the scanning apparatus. This 'ideal' shape may further improve the image quality and contrast of the scan. Further, the 3DCT scanning parameters may be optimised, hence improving scanning efficiency.

It will be appreciated that the arrangements disclosed herein may improve the image quality and contrast of an object scanned by a CT scanning, or other scanning apparatus. The efficiency of the CT scanning method may be improved as a plurality of objects may be scanned at once. Further, the CT scanning parameters may be optimised for a single object, therefore decreasing scan time and improving scanning efficiency.

It will be understood that the claims are not limited to the arrangements above described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method (50) for scanning of an object (16) in a scanning apparatus (10), the method comprising:
disposing the object (16) on a support (18) of the scanning apparatus (10), so that the object is positioned between an imaging beam emitting element (12) and an imaging beam receiving element (24) oppositely disposed to either side of the support (18), wherein the support is rotatable relative to the emitting and receiving elements about an axis of rotation (20) to allow creation of an image from projections each taken at a different relative angle of rotation; the object (16) being positioned on the support so that a part to be scanned of the object is offset from the axis of rotation; and the method further comprising
operating the scanning apparatus at the multiple relative angles of rotation to produce an image of the offset object.

2. A method according to claim 1, wherein a plurality of objects offset from the axis of rotation (20) is disposed on the support (18), and preferably wherein no part or no part to be scanned of any of the objects intersects the axis of rotation.

3. A method according to claim 2, wherein the plurality of objects is disposed on the support (18) so that a notional line drawn from the emitting element (12) to the receiving element (24) through the axis of rotation (20) intersects two or more of the plurality of objects for at least a third and preferably over half of the projections.

4. A method according to claim 2 or 3, wherein the objects are turbine blades (100, 100a) each with a leading edge (110, 110a) and a trailing edge (120, 120a) separated by a concave blade surface (130) opposite to a convex blade surface (140), and preferably wherein the convex blade surface (140) of each blade faces the axis of rotation (20).

5. A method according to any of claims 2 to 4, wherein the objects are positioned in a pattern on vertices of a notional regular geometric figure centred on the axis of rotation (20), optionally wherein further objects are positioned in a pattern on inner vertices of a further notional regular geometric figure centred on the axis of rotation and inside the notional regular geometric figure.

6. A method according to claim 5, wherein the objects are oriented to provide rotational symmetry of the pattern of objects about the axis of rotation (20).

7. A method according to any of claims 2 to 6, wherein there is a plurality of objects grouped in a configuration directly adjacent to each other and preferably wherein the objects are elongate in cross section and a shape of the configuration formed by the combined shape of the objects in the configuration has a lower aspect ratio than a single one of the objects, more preferably wherein the aspect ratio of the configuration is less than two thirds of the aspect ratio of a single one of the objects.

8. A method according to claim 11 or 12, wherein the objects are turbine blades (100, 100a), each with a leading edge (110, 110a) and a trailing edge (120, 120a) separated by blade surfaces, and wherein the blades are positioned in the configuration in alternate head to toe configuration with the leading edge (110, 110a) of one blade positioned adjacent to the trailing edge (120, 120a) of the adjacent blade.

9. A method according to any of the preceding claims, wherein the object or each object or a configuration of objects is contained within a jacket (180), with the volume surrounding the object within the jacket being occupied by a filling material (170) or a solid jacket volume, the jacket being positioned offset to the axis of rotation (20), preferably so that the jacket (180) does not intersect the axis of rotation, more preferably so that no part of the object to be scanned (16), no part of the object, objects or configuration intersects the axis of rotation.

10. A method according to claim 14, wherein the filling material (170) or solid jacket volume has an imaging beam attenuation close to the imaging beam attenuation of the material of the object (16), preferably wherein the filling material or solid jacket volume has the same imaging beam attenuation as the imaging beam attenuation of the material of the object (16).

11. A method according to any of claims 14 to 15, wherein the filling material is in the form of powder, preferably a metal powder of the same material as the object, or the solid jacket volume is formed of the same material as the object (16).

12. A method according to any of claims 14 to 16, further comprising a border region surrounding or partially surrounding the object in the jacket with an imaging beam attenuation different from the imaging beam attenuation of the object, preferably wherein the border region is formed by inserting the object into a protective film or wall or sleeve.

13. A method according to any of claims 14 to 17, wherein the jacket (180) has a circular cross-section and preferably comprises one or more walls together forming a spherical or part spherical surface; or a cylindrical side wall extending from a base, preferably wherein the base and side wall are formed of a polymer film or wall containing the filling material (170).

14. A method according to any of the preceding claims, wherein the scanning apparatus (10) is a computational tomography, CT, scanning apparatus (10), preferably a three-dimensional, 3DCT, scanning apparatus, and wherein the imaging beam is an x-ray.

15. A combination of a scanning apparatus (10) for scanning of an object (16) and an object (16) in the scanning apparatus, the scanning apparatus comprising:
a support (18) for the object (16); and
an imaging beam emitting element (12) and an imaging beam receiving element (24) oppositely disposed to either side of the support (18), wherein the support is rotatable relative to the emitting and receiving elements about an axis of rotation (20) to allow creation of an image of a part to be scanned of the object or the object (16) from projections each taken at a different relative angle of rotation; wherein a part of the object to be scanned or the object is positioned on the support (18) offset from the axis of rotation; so that when the scanning apparatus (10) is operated at the multiple relative angles of rotation it produces an image of the object (16) at a position which does not overlap the axis of rotation.
